# EUROPEAN PATENT SPECIFICATION

(11) **EP 2 405 637 B1**
(45) Date of publication and mention of the grant of the patent: **07.09.2016**
(21) Application number: 11005439.2
(22) Date of filing: 04.07.2011
(51) Int. Cl.: H04M 3/523

(54) **Method, distribution system and computer program product for a deterministic automatic call distribution system**
Verfahren, Verteilungssystem und Computerprogrammprodukt für ein deterministisches automatisches Anrufverteilungssystem
Procédé, système de distribution et produit de programme informatique pour un système déterministique de distribution automatique d'appels

(30) Priority: 06.07.2010 EP 10006939; 06.07.2010 US 361655 P
(43) Date of publication of application: 11.01.2012
(73) Proprietor: Deutsche Telekom AG, 53113 Bonn (DE)
(72) Inventor: Vöhringer, Gerrit, Dr., 53229 Bonn (DE)
(74) Representative: Schwöbel, Thilo K.

(56) References cited:
- DE-A1-102008 032 360
- US-A1- 2005 129 211
- US-A1- 2009 323 677
- US-B1- 6 442 592

## Description

### BACKGROUND

The present invention relates to a method, a distribution system and a computer program product for routing a communication request of a first party to one of a plurality of second parties.

Increasingly, large companies and organizations comprise service centers to interact with their customers via all kinds of telecommunication channels, e. g., to provide product support or to handle information inquiries from customers. Such service centers usually comprise appropriate distribution systems to efficiently handle the large volume of incoming communication requests sent by customers via phone calls, e-mails, SMS, faxes, etc.. In the prior art, a large volume of incoming phone calls is handled, e. g., by means of an ACD (Automatic Call Distribution) system comprising a routing strategy to distribute the incoming calls and, thus, the work load among a plurality of call centers and/or call center agents such that the use of call center resources is being optimized. For this purpose, simple ACD systems typically use a random algorithm to route an incoming call randomly to any one of the plurality of available call centers and/or call center agents. In addition, the random algorithm is often based on a predefined rule set which takes into account various parameters like, e. g., the location of the calling customer, time of day, day of the week, etc., to further optimize the use of available call center resources. Such random routing strategies, however, have the drawback that a calling customer will usually be directed to different call centers and/or call center agents each time the calling customer calls the service center. Hence, the calling customer usually has to repeat certain information each time the calling customer calls the service center and, thus, time is wasted both for the calling customer and for the call center agent.

More sophisticated ACD systems, therefore, often comprise a central database, in which important information of each calling customer, e. g., the customer's name, address, phone number and details about inquiries, provided in a previous phone call are recorded. Preferably, each call center and/or call center agent is linked to the central database and can access the recorded information so that an incoming call by a calling customer can be handled very efficiently. Moreover, ACD systems comprising a central database often provide functionality to allocate a particular customer to a particular call center and/or call center agent so that it can be ensured that the particular customer will always be directed to the particular call center and/or call center agent in each subsequent call. Hence, the customer advantageously receives the impression to have a personal contact person being in charge for him. Such ACD systems are, e. g., disclosed in the patent application DE 10 2008 032 360 A1 and in the US patent US 5,703,943 A. However, the disadvantage of such ACD systems is that rather complex communication networks are required to provide access for each call center and/or call center agent to the central database and, hence, the operation of such central database is comparatively cost-intensive.

### SUMMARY

An object of the present invention is to provide a method, a distribution system and a computer program product for routing a communication request of a first party to one of a plurality of second parties such that the above mentioned drawbacks of the prior art can be avoided. Therefore, the present invention proposes a method, wherein the method guarantees that a communication request of a particular first party will always be routed to a particular one of the plurality of second parties, wherein the method furthermore realizes that a plurality of communication requests of a plurality of first parties is stochastically distributed among the plurality of second parties, and wherein the method is applicable without the need of an extensive and cost-intensive central database.

The object of the present invention is achieved by routing a communication request of a first party to one of a plurality of second parties by means of a distribution system, wherein a first step comprises the transmission of a communication request of the first party to the distribution system, wherein a second step comprises the transmission of a first party identification information by the first party to the distribution system, wherein a third step comprises an unambiguous mapping of the first party identification information onto a particular one of the plurality of second parties by the distribution system using a deterministic algorithm, wherein the deterministic algorithm stochastically distributes a plurality of differing first party identification information among the plurality of second parties, wherein the deterministic algorithm comprises a hash algorithm, wherein the third step comprises the calculation of a hash value from the first party identification information by means of the hash algorithm, wherein a fourth step comprises the routing of the communication request to the particular one of the plurality of second parties by the distribution system in dependence of the hash value.

In the context of the present invention, the term "unambiguous" means that a particular first party identification information will be mapped onto a particular one of the plurality of second parties each time the particular first party identification information is being mapped by the deterministic algorithm.

Furthermore, in the context of the present invention, the term "stochastically" means that distributing any first random set of differing first party identification information among the plurality of second parties according to the deterministic algorithm will result in a first frequency distribution of second parties, wherein distributing any second random set of differing first party identification information according to the deterministic algorithm will result in a second frequency distribution of second parties, wherein the first frequency distribution substantially equals the second frequency distribution, i.e. the frequency of a second party according to the first frequency distribution substantially equals the frequency of the second party according to the second frequency distribution for each of the plurality of second parties. One skilled in the art understands that in order to achieve a good agreement between the first frequency distribution and the second frequency distribution, the number of differing elements of the first and second random set of differing first party identification information being distributed among the plurality of second parties has to be much larger than the number of second parties. In the context of the present invention, "substantially equals" means that if the number of elements of the first and second random set of differing first party identification information is larger than the number of second parties by at least a factor of 1000, the relative deviation between the frequency of a second party according to the first frequency distribution and the frequency of the second party according to the second frequency distribution will be less than 30%, preferably less than 10% and more preferably less than 5% for each of the plurality of second parties. Dependent on the specific embodiment of the deterministic algorithm the first frequency distribution and the second frequency distribution, respectively, correspond to a uniform distribution or a Poisson distribution or a Gaussian distribution or any other non-uniform distribution.

According to the present invention, it is, thereby, advantageously possible that each communication request of a first party will be routed to the same one of the plurality of second parties provided that the same first party identification information is transmitted along with each communication request, wherein a plurality of communication requests is stochastically distributed among a plurality of second parties according to a frequency distribution defined by the deterministic algorithm. According to the present invention, the first party identification information can be any information that identifies the first party, preferably a phone number and/or a fax number and/or an IMSI number and/or an IMEI number and/or an e-mail address and/or an IP address and/or any alphanumerical value. For instance, if a first party sends a communication request to the distribution system via a telephone apparatus connected to the PSTN (Public Switched Telephone Network) the first party identification information could preferably be the phone number of the used telephone apparatus transmitted to the distribution system by Automatic Number Identification (ANI) or Calling Line Identification Presentation (CLIP), wherein according to the method of the present invention the phone number will then be mapped unambiguously onto a particular one of the plurality of second parties by the distribution system. Thus, it can be advantageously ensured that any communication request transmitted via the same telephone apparatus will always be routed to the same one of the plurality of second parties.

The hash algorithm (in the following also called hash function) preferably converts a large, possibly variable-sized amount of data into a small datum, usually a single integer that may serve as an index to an array (associative array). The value returned by the hash function is called the hash value. The hash algorithm can be e.g. a cyclic redundancy check (crc) or a checksum algorithm. The hash algorithm can be non cryptographic (e.g. Pearson hashing) or cryptographic

(e.g. BLAKE 256).

According to the present invention it is preferred that in the third step, by performing a modulo n operation on the hash value, a remainder is determined, wherein n is the total number of the second parties, wherein in the fourth step the communication request is routed to the particular one of the plurality of second parties by the distribution system in dependence of the remainder. The modulo operation preferably is an algorithm which finds the remainder of division of one number by another. Given two positive numbers: x (the dividend) and y (the divisor), x modulo y (abbreviated as x mod y) can be thought of as the remainder on division of x by y. Preferably performing the modulo n operation on the hash value means that the hash value is divided by n, which is the total number of the second parties, and the remainder of the division is determined.

According to the present invention, it is, thereby, advantageously possible to assure that a set of differing first party identification information will be stochastically distributed among a plurality of second parties even if the elements of the set of differing first party identification information are very similar to each other, e..g., if the elements of the set of differing first party identification information correspond to numerical values which differ by a few digits only. Furthermore, since the computing time for a hash algorithm is comparatively small, it is advantageously possible to keep hardware requirements and costs for the distribution system low.

According to the present invention, it is preferred that the deterministic algorithm is realized such that distributing a plurality of differing first party identification information among a plurality of second parties according to the deterministic algorithm results in a frequency distribution of second parties, wherein the frequency distribution substantially equals a uniform distribution.

According to the present invention, it is, thereby, advantageously possible that a large volume of communication requests is distributed substantially uniformly among a plurality of second parties. For instance, it is, thereby, advantageously possible that a large volume of incoming calls is evenly distributed by the distribution system among a plurality of call center agents of a service center to provide a well-balanced work load among the call center agents.

According to the present invention, it is, furthermore, preferred that the deterministic algorithm is realized such that distributing a plurality of differing first party identification information among a plurality of second parties according to the deterministic algorithm results in a frequency distribution of second parties, wherein the frequency distribution substantially equals a non-uniform distribution, wherein the deterministic algorithm comprises that a probability factor is assigned to each one of the plurality of second parties, wherein the frequency of each one of the plurality of second parties according to the non-uniform distribution corresponds to the assigned probability factor.

According to the present invention, it is, thereby, advantageously possible that a large volume of communication requests is distributed non-uniformly among a plurality of second parties according to the assigned probability factors. By choosing appropriate probability factors it is, thereby, advantageously possible to flexibly control the fraction of communication requests of the plurality of first parties that will be routed to each one of the plurality of second parties. For instance, it is, thereby, advantageously possible that a large volume of incoming calls is distributed non-uniformly by the distribution system among a plurality of call centers of a service center according to the available capacity of each call center such that the use of call center resources is optimized.

According to the present invention, it is preferred that the first party identification information is transmitted substantially at the same time as the communication request of the first party.

According to the present invention, it is, thereby, advantageously possible to transmit the communication request of the first party and the first party identification information in only one step. For instance, if the communication request is transmitted via a PSTN (Public Switched Telephone Network) the first party identification information could preferably be the phone number of the first party which is transmitted substantially at the same time as the communication request via Automatic Number Identification (ANI) or Calling Line Identification Presentation (CLIP).

According to the present invention, it is preferred that the method according to the present invention comprises a fifth step, wherein the fifth step comprises the transmission of a prompt request by the distribution system to the first party, wherein the fifth step is performed after the first step and prior to the second step.

According to the present invention, it is, thereby, advantageously possible that the first party is requested via the prompt request to manually transmit a particular first party identification information to the distribution system. Thus, it is advantageously possible that a particular first party identification information is transmitted which is not related to the communication channel or terminal being used for the transmission of the communication request. Preferably, the first party can be requested to transmit a customer ID and/or an account number and/or a credit card number and/or a transaction number and/or any alphanumerical value that identifies the first party. For instance, if a communication request of a first party is transmitted to the distribution system via a PSTN, the first party will, e. g., receive a voice message as a prompt request from the distribution system via the PSTN and will be requested by said voice message to key in a customer ID as a first party identification information using the telephone keypad, wherein the customer ID will then be transmitted to the distribution system, e. g., by means of Dual-Tone Multi-Frequency signaling (DTMF) via the PSTN.

According to the present invention, it is, thereby, furthermore advantageously possible that along with each communication request the same first party identification information can be transmitted independent from the terminal and communication channel used for the transmission of the communication request and the first party identification information. For instance, it can, thereby, be advantageously ensured that each communication request of a particular first party will always be routed to the same particular one of the plurality of second parties by the distribution system no matter whether the communication request is transmitted via a phone call or via e-mail or via a SMS or via any other communication channel.

According to the present invention, it is preferred that the communication request is transmitted via a first communication channel, wherein the first party identification information is transmitted via the first communication channel and/or a second communication channel, wherein the prompt request is transmitted via the first communication channel and/or the second communication channel and/or a third communication channel.

According to the present invention, a communication channel preferably comprises a telephone call and/or a video call and/or a SMS (Short Message Service) and/or a MMS (Multimedia Messaging Service) and/or a fax and/or an e-mail and/or an IM (Instant Message) and/or an IP communication. According to the present invention, it is, thereby, advantageously possible that the communication request and the first party identification information and the prompt request are transmitted via the same communication channel, e. g., via a phone call using a PSTN, which makes the communication between the first party and the distribution system comparatively convenient. However, according to the present invention, it is, furthermore, advantageously possible that the communication request and the first party identification request and the prompt request are transmitted via different communication channels, e. g., the communication request and the first party identification information can be transmitted via a phone call using a PSTN and the prompt request can be transmitted via a SMS using a PLMN. One skilled in the art will understand that various other embodiments are possible as well. Using different communication channels advantageously provides a high flexibility for the communication between the first party and the distribution system.

The present invention, furthermore, relates to a distribution system for routing a communication request of a first party to one of a plurality of second parties, wherein the first party transmits a communication request and a first party identification information to the distribution system, wherein the distribution system comprises a reception means for receiving the communication request and for receiving the first party identification information, wherein the distribution system comprises a processor to unambiguously map the first party identification information onto a particular one of a plurality of second parties using a deterministic algorithm, wherein the deterministic algorithm stochastically distributes a plurality of differing first party identification information among the plurality of second parties, wherein the deterministic algorithm comprises a hash algorithm, wherein a hash value from the first party identification information by means of the hash algorithm is calculated, wherein the distribution system comprises a switching means for routing the communication request to the particular one of the plurality of second parties determined by the deterministic algorithm in dependence of the hash value.

According to the present invention, it is preferred that the distribution system furthermore comprises a transmitting means for the transmission of a prompt request.

According to the present invention, it is, thereby, advantageously possible that the first party can be requested by the distribution system to manually transmit a particular first party identification information which is not provided by the communication network itself.

Furthermore, the present invention relates to a program comprising a computer readable program code which, when executed on a computer, causes the computer to perform a method for routing a communication request of a first party to one of a plurality of second parties according to the present invention.

Furthermore, the present invention relates to a computer program product comprising a computer program stored on a storage medium, the computer program comprising a computer readable program code which, when executed on a computer, causes the computer to perform a method for routing a communication request of a first party to one of a plurality of second parties according to the present invention.

These and other characteristics, features and advantages of the present invention will become apparent from the following detailed description, taken in conjunction with the accompanying drawings, which illustrate, by way of example, the principles of the invention. The description is given for sake of example only, without limiting the scope of the invention. The reference figures quoted below refer to the attached drawings.

### BRIEF DESCRIPTION OF THE DRAWINGS

Figure 1 shows schematically a first embodiment of the method according to the present invention for routing a communication request by means of a distribution system.
Figure 2 shows schematically the routing of two communication requests of a first party and another first party transmitting the same first party identification information according to the first embodiment of the present invention.
Figure 3 shows schematically a second embodiment of the method according to the present invention.
Figure 4 shows schematically the routing of a plurality of communication requests by means of a distribution system according to the first embodiment of the method of the present invention.
Figure 5 shows schematically the routing of a plurality of communication requests by means of a distribution system according to a third embodiment of the method of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e. g., "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any person skilled in the art will understand that other modifications or varieties of the invention are possible without departing from the broader spirit of the invention. Such modifications are therefore to be considered as falling within the spirit and the scope of the invention and hence forming part of the invention as herein described or exemplified. Accordingly, the exemplary description is to be regarded in an illustrative sense rather than in a restrictive sense.

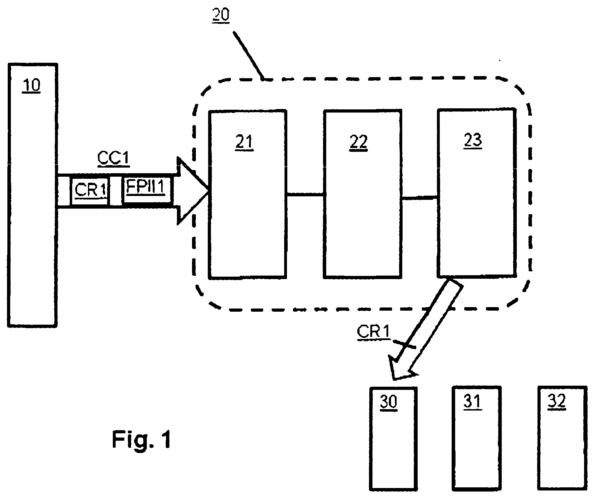

Figure 1 shows schematically the routing of a communication request CR1 of a first party 10 to a second party 30 of a plurality of second parties 30, 31, 32 by means of a distribution system 20 according to the method of the present invention, wherein the distribution system 20 comprises a reception means 21, a processor 22 and a switching means 23. In a first step of the method according to the present invention, the communication request CR1 is transmitted by the first party 10 to the distribution system 20 via a communication channel CC1. e. g., via a phone call or a fax or a SMS or an e-mail. In a second step, a first party identification information FPII1 is transmitted by the first party 10 to the distribution system 20 via the communication channel CC1. The first party identification information FPII1 can be any alphanumerical value that identifies the first party 10, e. g., a phone number or an e-mail address or a customer ID. Furthermore, it is possible that the first party identification information FPII1 is transmitted to the distribution system 20 using another communication channel (not illustrated) which differs from the communication channel CC1. The communication request CC1 and the first party identification information FPII1 is received by the reception means 21 and passed on to the processor 22. In a third step, the processor 22 executes a computer program product comprising a deterministic algorithm which maps the first party identification information FPII1 unambiguously onto the particular second party 30 of the plurality of second parties 30, 31, 32. One preferred embodiment of a deterministic algorithm according to the present invention is as follows:
- first, a list D of n second parties is generated,
- second, using a hash function a hash value H is calculated from the first party identification information FPII1, e. g., a MD5 (Message-Digest algorithm 5) hash is *calculated: H = MD5(FPII1),*
- third, a *modulo(n)* operation is executed on the hash value H resulting in a number *i* with 0 ≤ *i* ≤ *n*,
- fourth, the first party identification information FPII1 is assigned to element *i* of list *D,* wherein the element *i* represents one of the plurality of second parties 30, 31, 32

For the embodiment depicted in Figure 1, it follows that *D*={30, 31, 32}, *n* = 3, *i* = 1 so that the first party identification information FPII1 is mapped onto the particular second party 30 of the plurality of second parties 30, 31, 32.

In a fourth step, the communication request CR1 is passed on to the switching means 23, wherein the switching means 23 routes the communication request CR1 to the particular second party 30 determined by the deterministic algorithm in the third step. The method according to the present invention advantageously ensures that any communication request will be routed to the particular second party 30 by the distribution system 20 provided that along with each communication request the same first party identification information is transmitted. One possible application of the present invention relates to the field of service centers, wherein an incoming call of a calling customer originating from a telephone apparatus is routed to one of a plurality of call centers and/or call center agents, wherein, according to the method of the present invention, it is possible to assure that any subsequent call of the calling customer originating from the same telephone apparatus, will be routed to the same one of the plurality of call centers and/or call center agents, i. e., a particular calling customer is coupled to a particular call center and/or call center agent. However, this is only an example used for the sake of illustration. The method, the distribution system 20 and the computer program product according to the present invention is not restricted to phone calls but can be applied for any communication channel being used for a communication between the first party 10 and the distribution system 20 like, e.g., SMS communication, fax communication, e-mail communication or IP communication. Furthermore, the communication request CR1 and/or the first party identification information FPII1 can be transmitted via any terminal, e.g., a telephone apparatus connected to the PSTN, a mobile phone connected to the PLMN or a computer terminal connected to an IP network.

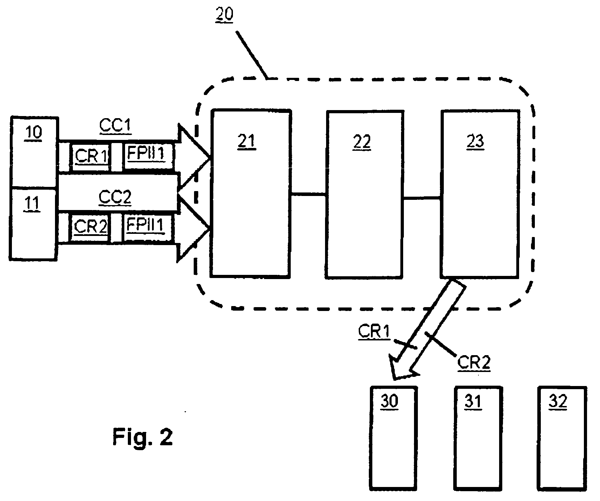

Figure 2 shows schematically the routing of two communication requests CR1, CR2 to a plurality of second parties 30, 31, 32. In the first and second step according to the present invention, a first party 10 transmits a communication request CR1 and a first party identification information FPII1 to the distribution system 20 using a communication channel CC1, wherein another first party 11 transmits another communication request CR2 and the first party identification information FPII1 using another communication channel CC2. For instance, the first party 10 uses a telephone apparatus connected to the PSTN to transmit the communication request CR1 and a customer ID (as the first party identification information FPII1) via a phone call, wherein the other first party 11 uses a mobile phone connected to the PLMN and transmits the other communication request CR2 and the same customer ID via a mobile phone call. In the third step according to the present invention, the first party identification information FPII1 transmitted by the first party 10 and the first party identification information FPII1 transmitted by the other first party 11 are both mapped onto the same second party 30 of the plurality of second parties 30, 31, 32 by the distribution system 20 according to the deterministic algorithm described for Figure 1 since the deterministic algorithm according to the present invention ensures an unambiguous mapping of the first party identification information FPII1. According to the present invention, it is, thereby, advantageously possible to assure that any communication request transmitted to the distribution system 20 will be routed to the same second party 30 independent from the terminal or communication channel being used by a first party provided that along with each communication request the same first party identification information FPII1 is transmitted.

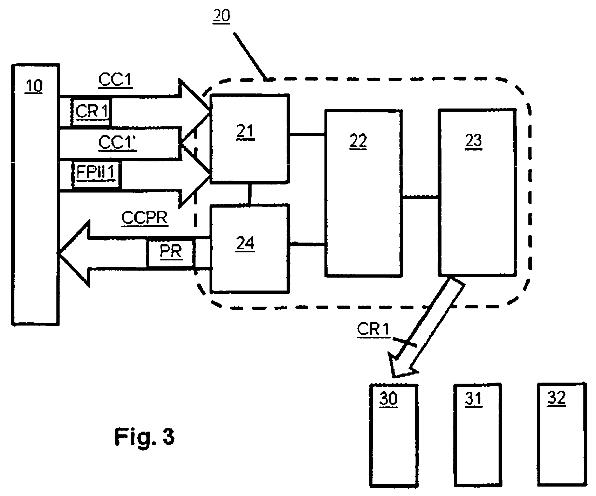

Figure 3 shows schematically a second embodiment of the method according to the present invention, wherein the second embodiment of the method is similar to the method described for Figure 1, but wherein the method comprises a fifth step, wherein the fifth step is performed after the first step, i. e., after the transmission of the communication request CR1 of the first party 10 using the communication channel CC1, and wherein the distribution system 20 comprises a transmitting means 24 for a transmission of a prompt request PR using a prompt request communication channel CCPR. In the fifth step, the communication request CR1 is received by the reception means 21, wherein the reception means 21 triggers the transmitting means 24 to send the prompt request PR to the first party 10 using the prompt request communication channel CCPR. For instance, the first party 10 is requested by the prompt request PR to transmit a particular first party identification information FPII1. Thereby, it is advantageously possible that, e. g., the distribution system 20 requests a particular first party identification information FPII1 that is not provided by the communication network itself and, thus, can only be provided manually by the first party 10, e. g., a customer ID. In the third step, according to the present invention, the first party 10 then transmits the requested first party identification information FPII1 using a further communication channel CC1'. In the third step, the first party identification channel FPII1 is received by the reception means 21 and is mapped unambiguously according to the deterministic algorithm described for Figure 1 onto a particular second party 30 of the plurality of second parties 30, 31, 32 by the distribution system 20, wherein in the fourth step the communication request CR1 is routed to the particular second party 30 of the plurality of second parties 30, 31, 32.

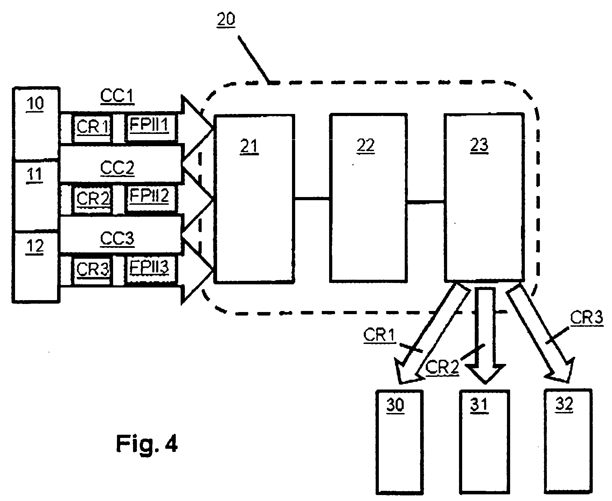

Figure 4 shows schematically the routing of a plurality of communication requests CR1, CR2, CR3 of a plurality of first parties 10, 11, 12 to a plurality of second parties 30, 31, 32 by means of the distribution system 20. In the first step and in the second step of the method according to the present invention, a first party 10 transmits a communication request CR1 and a first party identification information FPII1 to the distribution system 20 using a communication channel CC1, wherein another first party 11 transmits another communication request CR2 and another first party identification information FPII2 to the distribution system 20 using another communication channel CC2 and wherein the third first party 12 transmits a third communication request CR3 and a third first party identification information FPII3 to the distribution system 20 using a third communication channel CC3. For instance, the communication channel CC1 corresponds to a phone call, the other communication channel CC2 corresponds to a SMS communication and the third communication channel CC3 corresponds to an e-mail communication. However, according to the present invention, it is also possible that each first party of the plurality of first parties 10, 11, 12 uses the same communication channel. In the third step, each first party identification information of the plurality of first party identification information FPII1, FP112, FPII3 is mapped unambiguously onto one of the plurality of second parties 30, 31, 32 using the deterministic algorithm described for Figure 1. The particular embodiment of the deterministic algorithm described for Figure 1 ensures that the plurality of first party identification information 10, 11, 12 is distributed substantially evenly among the plurality of second parties 30, 31, 32. Thus, as illustrated in Figure 2, e. g., the first party identification information FPII1 is mapped onto a particular second party 30, the other first party identification information FPII2 is mapped onto another particular second party 31 and the third first party identification information is mapped onto a third particular second party 32. Accordingly, the distribution system 20 will route the communication request CR1 to the particular second party 30, the other communication request CR2 to the other particular second party 31, and the third communication request CR3 to the third particular second party 32. However, this is only one example used for the sake of illustration and one skilled in the art will understand that any other uniform distribution of the communication requests CR1, CR2, CR3 among the plurality of second parties 30, 31, 32 is possible.

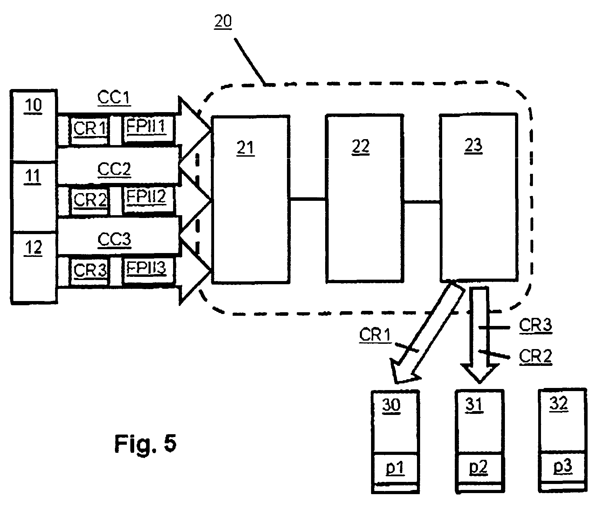

Figure 5 shows schematically a third embodiment of the method according to the present invention, wherein the third embodiment according to the present invention is similar to the first embodiment described in Figure 4, but wherein the third step according to the present invention comprises a second deterministic algorithm to map a plurality of first party identification information FPII1, FPII2, FPII3 unambiguously onto a plurality of second parties 30, 31, 32. According to the third embodiment of the present invention, the plurality of first party identification information FPII1, FPII2, FPII3 is distributed non-uniformly among the plurality of second parties 30, 31, 32 according to probability factors p1, p2, p3 assigned within the second deterministic algorithm to each second party of the plurality of second parties 30, 31, 32, wherein a first probability factor p1 is assigned to a particular second party 30, wherein a second probability factor p2 is assigned to another particular second party 31, wherein a third probability factor p3 is assigned to a third particular second party 32. The probability factors p1, p2, p3 can be any numerical values between 0 and 1, wherein the sum over all probability factors p1, p2, p3 equals 1. According to the third embodiment depicted in Figure 5, e. g., p1 equals 1/3, p2 equals 2/3 and p3 equals 0. Thus, one first party identification information FPII1 of the plurality of the first party identification information FPII1, FPII2, FPII3 is mapped onto the particular second party 30, two first party identification information FPII2, FPII3 of the plurality of the first party identification information FPII1, FPII2, FPII3 are mapped onto the other particular second party 31 and none of the plurality of the first party identification information FPII1, FPII2, FPII3 is mapped onto the third particular second party 32 by the distribution system 20 using the second deterministic algorithm. Accordingly, the communication request CR1 is routed to the particular second party 30 and the communication request CR2 and the communication request CR3 are routed to the other particular second party 31 by the distribution system 20. According to the third embodiment of the inventive method, it is, thus, advantageously possible to control the fraction of the plurality of communication requests 10, 11, 12 routed to each second party of the plurality of second parties 30, 31, 32 by choosing appropriate probability factors p1, p2, p3 within the second deterministic algorithm. One possible application of the present invention according to the third embodiment relates to a service center, wherein the fraction of incoming calls routed to each call center and/or call center agent of a plurality of call centers and/or call center agents can be controlled by means of the probability factors p1, p2, p3. Hence, it is, e. g., advantageously possible to balance the work load among a plurality of call centers with regard to the capacity of each call center. One preferred embodiment of the second deterministic algorithm is as follows:
- first, a list *D* of *k* entries is generated, whereas D contains each second party of the plurality of second parties 30, 31, 32 with a frequency according to the probability factors p1, p2, p3 assigned to each second party of the plurality of second parties 30, 31, 32
- second, using a hash function, a hash value *H* is calculated for each of the plurality of first party identification information FPII1, FPII2, FPII3
- third, a *modulo(k)* operation is executed on each hash value *H* resulting in a number *i* with *0* ≤ *i* ≤ *k,*
- fourth, each of the plurality of first party identification information FPII1, FPII2, FPII3 is assigned to an element *i* of list *D*, wherein each element *i* represents a second party of the plurality of second parties 30, 31, 32.

For the embodiment depicted in Figure 5, the list *D* contains the particular second party 30 with a frequency of one, wherein the list *D* contains the other particular second party 31 with a frequency of two, wherein the list *D* contains the third particular second party 32 with a frequency of zero such that *D* = {30, 31, 31} and k = 3.

## Claims

1. Method for routing a communication request (CR1, CR2, CR3) of a first party (10, 11, 12) to one of a plurality of second parties (30, 31, 32) by means of a distribution system (20), wherein a first step comprises the transmission of the communication request (CR1, CR2, CR3) by the first party (10, 11, 12) to the distribution system (20), wherein a second step comprises the transmission of a first party identification information (FPII1, FPII2, FPII3) by the first party (10, 11, 12) to the distribution system (20), wherein a third step comprises an unambiguous mapping of the first party identification information (FPII1, FPII2, FPII3) onto a particular one of the plurality of second parties (30, 31, 32) by the distribution system (20) using a deterministic algorithm, wherein the deterministic algorithm stochastically distributes a plurality of differing first party identification information (FPII1, FPII2, FPII3) among the plurality of second parties (30, 31, 32), wherein the deterministic algorithm comprises a hash algorithm, wherein the third step comprises the calculation of a hash value from the first party identification information (FPII1, FPII2, FPII3) by means of the hash algorithm, wherein a fourth step comprises the routing of the communication request (CR1, CR2, CR3) to the particular one of the plurality of second parties (30, 31, 32) by the distribution system (20) in dependence of the hash value, wherein in the third step, by performing a modulo n operation on the hash value, a remainder is determined, wherein n is the total number of the second parties (30, 31, 32), wherein in the fourth step the communication request (CR1, CR2, CR3) is routed to the particular one of the plurality of second parties (30, 31, 32) by the distribution system (20) in dependence of the remainder.

2. Method according to claim 1, wherein the method comprises a fifth step, wherein the fifth step comprises the transmission of a prompt request (PR) by the distribution system (20) to the first party (10, 11, 12), wherein the fifth step is performed after the first step and prior to the second step.

3. Method according to any of the preceding claims, wherein the transmission of the communication request (CR1, CR2, CR3) uses a first communication channel (CC1, CC2, CC3), wherein the transmission of the first party identification information (FPII1, FPII2, FPII3) uses the first communication channel (CC1, CC2, CC3) and/or a second communication channel (CC1'), wherein the transmission of the prompt request (PR) uses the first communication channel (CC1, CC2, CC3) and/or the second communication channel (CC1') and/or a third communication channel (CCPR).

4. Distribution system (20) for routing a communication request (CR1, CR2, CR3) of a first party (10, 11, 12) to one of a plurality of second parties (30, 31, 32), wherein the first party (10, 11, 12) transmits a communication request (CR1, CR2, CR3) and a first party identification information (FPII1, FPII2, FPII3) to the distribution system (20), wherein the distribution system (20) comprises a reception means (21) for receiving the communication request (CR1, CR2, CR3) and for receiving the first party identification information (FPII1, FPII2, FPII3), wherein the distribution system (20) comprises a processor (22) to unambiguously map the first party identification information (FPII1, FPII2, FPII3) onto a particular one of the plurality of second parties (30, 31, 32) using a deterministic algorithm, wherein the deterministic algorithm stochastically distributes a plurality of differing first party identification information (FPII1, FPII2, FPII3) among the plurality of second parties (30, 31, 32), wherein the deterministic algorithm comprises a hash algorithm, wherein a hash value from the first party identification information (FPII1, FPII2, FPII3) by means of the hash algorithm is calculated, wherein the distribution system (20) comprises a switching means (23) for routing the communication request (CR1, CR2, CR3) to the particular one of the plurality of second parties (30, 31, 32) in dependence of the hash value, wherein, by performing a modulo n operation on the hash value, a remainder is determined by the deterministic algorithm, wherein n is the total number of the second parties (30, 31, 32), wherein the communication request (CR1, CR2, CR3) is routed to the particular one of the plurality of second parties (30, 31, 32) by the distribution system (20) in dependence of the remainder.

5. Distribution system (20) according to claim 4, wherein the distribution system (20) comprises a transmitting means (24) for the transmission of a prompt request (PR).

6. Program comprising a computer readable program code which, when executed on a computer, causes the computer to perform a method for routing a communication request (CR1, CR2, CR3) of a first party (10, 11, 12) to one of a plurality of second parties (30, 31, 32) according to any of the claims 1 to 3.

7. Computer program product comprising a computer program stored on a storage medium, the computer program comprising a computer readable program code which, when executed on a computer, causes the computer to perform a method for routing a communication request (CR1, CR2, CR3) of a first party (10, 11, 12) to one of a plurality of second parties (30, 31, 32) according to any of the claims 1 to 3.

## Patentansprüche

1. Verfahren zum Routen einer Kommunikationsanfrage (CR1, CR2, CR3) von einem Teilnehmer (10, 11, 12) zu einem von mehreren zweiten Teilnehmern (30, 31, 32) mittels eines Verteilungssystems (20), wobei ein erster Schritt das Übertragen der Kommunikationsanfrage (CR1, CR2, CR3) durch den ersten Teilnehmer (10, 11, 12) zu dem Verteilungssystem (20) aufweist, wobei ein zweiter Schritt das Übertragen einer Information zur Identifikation des ersten Teilnehmers (FPII1, FPII2, FPII3) durch den ersten Teilnehmer (10, 11, 12) zu dem Verteilungssystem (20) aufweist, wobei ein dritter Schritt ein ein-eindeutiges Zuordnen der Identifikationsinformation des ersten Teilnehmers (FPII1, FPII2, FPII3) zu einem bestimmten der mehreren zweiten Teilnehmer (30, 31, 32) durch das Verteilungssystem (20) mittels eines deterministischen Algorithmus aufweist, wobei der deterministische Algorithmus mehrere unterschiedliche Informationen zur Identifikation des ersten Teilnehmers (FPII1, FPII2, FPII3) unter den mehreren zweiten Teilnehmern (30, 31, 32) stochastisch verteilt, wobei der deterministische Algorithmus einen Hash-Algorithmus aufweist, wobei der dritte Schritt das Berechnen eines Hash-Wertes aus der Information zur Identifikation des ersten Teilnehmers (FPII1, FPII2, FPII3) mittels des Hash-Algorithmus aufweist, wobei ein vierter Schritt das Routen der Kommunikationsanfrage (CR1, CR2, CR3) auf den bestimmten der mehreren zweiten Teilnehmer (30, 31, 32) durch das Verteilungssystem (20) in Abhängigkeit von dem Hash-Wert aufweist, wobei in dem dritten Schritt durch das Anwenden einer Modulo-N-Operation auf den Hash-Wert ein Restwert ermittelt wird, wobei N die Gesamtzahl der zweiten Teilnehmer (30, 31, 32) ist, wobei in dem vierten Schritt die Kommunikationsanfrage (CR1, CR2, CR3) zu dem bestimmten der mehreren zweiten Teilnehmer (30, 31, 32) durch das Verteilungssystem (20) in Abhängigkeit von dem Restwert geroutet wird.

2. Verfahren nach Anspruch 1, wobei das Verfahren einen fünften Schritt aufweist, wobei der fünfte Schritt das Übertragen einer Eingabeaufforderung (PR) durch das Verteilungssystem (20) an den ersten Teilnehmer (10, 11, 12) aufweist, wobei der fünfte Schritt nach dem ersten Schritt und vor dem zweiten Schritt ausgeführt wird.

3. Verfahren nach einem der vorangegangenen Ansprüche, wobei das Übertragen der Kommunikationsanfrage (CR1, CR2, CR3) einen ersten Kommunikationskanal (CC1, CC2, CC3) verwendet, wobei das Übertragen der Identifikationsinformation des ersten Teilnehmers (FPII1, FPII2, FPII3) den ersten Kommunikationskanal (CC1, CC2, CC3) und/oder einen zweiten Kommunikationskanal (CC1') verwendet, wobei das Übertragen der Eingabeaufforderung (PR) den ersten Kommunikationskanal (CC1, CC2, CC3) und/oder den zweiten Kommunikationskanal (CC1') und/oder einen dritten Kommunikationskanal (CCPR) verwendet.

4. Verteilungssystem (20) zum Routen einer Kommunikationsanfrage (CR1, CR2, CR3) von einem ersten Teilnehmer (10, 11, 12) an einen von mehreren zweiten Teilnehmern (30, 31, 32), wobei der erste Teilnehmer (10, 11, 12) eine Kommunikationsanfrage (CR1, CR2, CR3) und eine Information zur Identifikation eines ersten Teilnehmers (FPII1, FPII2, FPII3) zu dem Verteilungssystem (20) überträgt, wobei das Verteilungssystem (20) ein Empfangsmittel (21) zum Empfangen der Kommunikationsanfrage (CR1, CR2, CR3) und zum Empfangen der Information zur Identifikation des ersten Teilnehmers (FPII1, FPII2, FPII3) aufweist, wobei das Verteilungssystem (20) einen Prozessor (22) aufweist, um die Information zur Identifikation des ersten Teilnehmers (FPII1, FPII2, FPII3) ein-eindeutig auf einen bestimmten der mehreren zweiten Teilnehmer (30, 31, 32) mittels eines deterministischen Algorithmus zuzuordnen, wobei der deterministische Algorithmus mehrere unterschiedliche Informationen zur Identifikation des ersten Teilnehmers (FPII1, FPII2, FPII3) unter den mehreren zweiten Teilnehmern (30, 31, 32) verteilt, wobei der deterministische Algorithmus einen Hash-Algorithmus aufweist, wobei ein Hash-Wert aus der Information zur Identifikation des ersten Teilnehmers (FPII1, FPII2, FPII3) mittels des Hash-Algorithmus berechnet wird, wobei das Verteilungssystem (20) ein Schaltmittel (23) zum Routen der Kommunikationsanfrage (CR1, CR2, CR3) zu dem bestimmten der mehreren zweiten Parteien (30, 31, 32) in Abhängigkeit von dem Hash-Wert Teilnehmer, wobei durch das Anwenden einer Modulo-N-Operation auf den Hash-Wert ein Restwert durch den deterministischen Algorithmus ermittelt wird, wobei N die Gesamtzahl der zweiten Teilnehmer (30, 31, 32) ist, wobei die Kommunikationsanfrage (CR1, CR2, CR3) zu dem bestimmten der zweiten Teilnehmer (30, 31, 32) durch das Verteilungssystem (20) in Abhängigkeit von dem Restwert geroutet wird.

5. Verteilungssystem (20) nach Anspruch 4, wobei das Verteilungssystem (20) ein Übertragungsmittel (24) zum Übertragen einer Eingabeaufforderung (PR) aufweist.

6. Programm, das einen Computer-lesbaren Programmcode aufweist, der, wenn er auf einem Computer ausgeführt wird, dazu führt, dass der Computer ein Verfahren zum Routen einer Kommunikationsanfrage (CR1, CR2, CR3) von einem ersten Teilnehmer (10, 11, 12) an mehrere zweite Teilnehmer (30, 31, 32) nach einem der Ansprüche 1 bis 3 ausführt.

7. Computerprogramm-Produkt, das ein Computerprogramm aufweist, das auf einem Speichermedium gespeichert wird, wobei das Computerprogramm Computer-lesbaren Programmcode aufweist, der, wenn er auf einem Computer ausgeführt wird, dazu führt, dass der Computer ein Verfahren zum Routen einer Kommunikationsanfrage (CR1, CR2, CR3) von einem ersten Teilnehmer (10, 11, 12) an einen von mehreren zweiten Teilnehmern (30, 31, 32) nach einem der Ansprüche 1 bis 3 ausführt.

## Revendications

1. Procédé pour router une demande de communication (CR1, CR2, CR3) d'un premier participant (10, 11, 12) vers l'un d'une pluralité de seconds participants (30, 31, 32) au moyen d'un système de distribution (20), dans lequel une première étape comprend la transmission de la demande de communication (CR1, CR2, CR3) par le premier participant (10, 11, 12) au système de distribution (20), dans lequel une deuxième étape comprend la transmission d'une information d'identification de premier participant (FPII1, FPII2, FPII3) par le premier participant (10, 11, 12) au système de distribution (20), dans lequel une troisième étape comprend un mappage sans ambiguïté de l'information d'identification de premier participant (FPII1, FPII2, FPII3) sur un participant particulier de la pluralité de seconds participants (30, 31, 32) par le système de distribution (20) en utilisant un algorithme déterministe, dans lequel l'algorithme déterministe distribue stochastiquement une pluralité de différentes informations d'identification de premier participant (FPII1, FPII2, FPII3) parmi la pluralité de seconds participants (30, 31, 32), dans lequel l'algorithme déterministe comporte un algorithme de hachage, dans lequel la troisième étape comprend le calcul d'une valeur de hachage à partir de l'information d'identification de premier participant (FPII1, FPII2, FPII3) au moyen de l'algorithme de hachage, dans lequel une quatrième étape comprend le routage de la demande de communication (CR1, CR2, CR3) vers le participant particulier de la pluralité de seconds participants (30, 31, 32) par le système de distribution (20) en fonction de la valeur de hachage, dans lequel dans la troisième étape, en effectuant une opération modulo n sur la valeur de hachage, un reste est déterminé, où n est le nombre total des seconds participants (30, 31, 32), dans lequel, dans la quatrième étape, la demande de communication (CR1, CR2, CR3) est routée vers ledit participant particulier de la pluralité de seconds participants (30, 31, 32) par le système de distribution (20) en fonction du reste.

2. Procédé selon la revendication 1, dans lequel le procédé comprend une cinquième étape, dans lequel la cinquième étape comprend la transmission d'une demande d'invite (RP) par le système de distribution (20) au premier participant (10, 11, 12), dans lequel la cinquième l'étape est effectuée après la première étape et avant la deuxième étape.

3. Procédé selon l'une quelconque des revendications précédentes, dans lequel la transmission de la demande de communication (CR1, CR2, CR3) utilise un premier canal de communication (CC1, CC2, CC3), dans lequel la transmission de l'information d'identification de premier participant (FPII1, FPII2, FPII3) utilise le premier canal de communication (CC1, CC2, CC3) et/ou un deuxième canal de communication (CC1'), dans lequel la transmission de la demande d'invite (RP) utilise le premier canal de communication (CC1, CC2, CC3) et/ou le deuxième canal de communication (CC1') et/ou un troisième canal de communication (CCPR).

4. Système de distribution (20) pour router une demande de communication (CR1, CR2, CR3) d'un premier participant (10, 11, 12) vers l'un d'une pluralité de seconds participants (30, 31, 32), dans lequel le premier participant (10, 11, 12) transmet une demande de communication (CR1, CR2, CR3) et une information d'identification de premier participant (FPII1, FPII2, FPII3) au système de distribution (20), dans lequel le système de distribution (20) comprend un moyen de réception (21) pour recevoir la demande de communication (CR1, CR2, CR3) et pour recevoir l'information d'identification de premier participant (FPII1, FPll2, FPIl3), dans lequel le système de distribution (20) comprend un processeur (22) pour mapper sans ambiguïté l'information d'identification de premier participant (FPII1, FPII2, FPII3) sur un participant particulier de la pluralité de seconds participants (30, 31, 32) en utilisant un algorithme déterministe, dans lequel l'algorithme déterministe distribue stochastiquement une pluralité de différentes informations d'identification de premier participant (FPII1, FPII2, FPII3) parmi la pluralité de seconds participants (30, 31, 32), dans lequel l'algorithme déterministe comporte un algorithme de hachage, dans lequel une valeur de hachage de l'information d'identification de premier participant (FPII1, FPII2, FPII3) est calculée au moyen de l'algorithme de hachage, dans lequel le système de distribution (20) comprend un moyen de commutation (23) pour router la demande de communication (CR1, CR2, CR3) au participant particulier de la pluralité de seconds participants (30, 31, 32) en fonction de la valeur de hachage, dans lequel, en effectuant une opération modulo n sur la valeur de hachage, un reste est déterminé par l'algorithme déterministe, où n est le nombre total des seconds participants (30, 31, 32), dans lequel la demande de communication (CR1, CR2, CR3) est routée vers le participant particulier de la pluralité de seconds participants (30, 31, 32) par le système de distribution (20) en fonction du reste.

5. Système de distribution (20) selon la revendication 4, dans lequel le système de distribution (20) comprend un moyen de transmission (24) pour la transmission d'une demande d'invite (RP).

6. Programme comprenant un code de programme lisible par ordinateur qui, lorsqu'il est exécuté sur un ordinateur, amène l'ordinateur à exécuter un procédé pour router une demande de communication (CR1, CR2, CR3) d'un premier participant (10, 11, 12) vers l'un d'une pluralité de seconds participants (30, 31, 32) selon l'une quelconque des revendications 1 à 3.

7. Produit de programme informatique comprenant un programme informatique stocké sur un support de stockage, le programme informatique comprenant un code de programme lisible par ordinateur qui, lorsqu'il est exécuté sur un ordinateur, amène l'ordinateur à exécuter un procédé pour router une demande de communication (CR1, CR2, CR3) d'un premier participant (10, 11, 12) vers l'un d'une pluralité de seconds participants (30, 31, 32) selon l'une quelconque des revendications 1 à 3.
